# EUROPÄISCHE PATENTANMELDUNG

(11) **EP 0 960 712 A1**
(43) Veröffentlichungstag der Anmeldung: **01.12.1999**
(21) Anmeldenummer: 98109507.8
(22) Anmeldetag: 26.05.1998
(51) Int. Cl.: B29C 45/00, A01K 95/00

(54) **Formkörper sowie Verfahren zur Herstellung von Formkörpern**

(71) Anmelder: EXORI - Import - Export Gesellschaft mit beschränkter Haftung & Co. KG, 22884 Weyhe-Dreye (DE)
(72) Erfinder: Stüssel, Bernd, 28816 Stuhr-Fahrenhorst (DE); Bammann, Hans, 28209 Bremen (DE); Bammann, Werner, 27321 Morsum (DE)
(74) Vertreter: Stenger, Watzke & Ring Patentanwälte

(57) **Zusammenfassung**

Die Erfindung betrifft ein Verfahren zur Herstellung von aus mindestens einem zerkleinerten Rohstoff (1) und mindestens einem Bindemittel (4) bestehenden Formkörpern. Um ein solches Verfahren dahingehend zu verbessern, daß dieses kostengünstig durchführbar ist und durch gezielte Auswahl der verwendeten Rohstoffe sowie der eingesetzten Verfahrensschritte eine Einflußnahme auf die technologischen Eigenschaften der Formkörper genommen werden kann, wird erfindungsgemäß vorgeschlagen, daß der mindestens eine Rohstoff (1) und das mindestens eine Bindemittel (4) über einen Mischer (3) zum Einstellen des gewünschten Verhältnisses Rohstoff-Bindemittel direkt zur Verarbeitung in eine Spritzgußmaschine (5) gegeben werden.

## Beschreibung

Die Erfindung betrifft ein Verfahren zur Herstellung von aus mindestens einem zerkleinerten Rohstoff und mindestens einem Bindemittel bestehenden Formkörpern. Weiterhin betrifft die Erfindung nach diesem Verfahren hergestellte Formkörper.

Im Stand der Technik sind eine Vielzahl von Verfahren zur Herstellung von Formkörpern und Fertigteilen bekannt. Eine Möglichkeit zur Unterteilung dieser Verfahren ist durch den zu verwendenden Rohstoff sowie dessen Struktur bzw. Eigenschaften gegeben. Unter Rohstoff soll im Sinne der vorliegenden Erfindung ein Material verstanden werden, aus welchem die unterschiedlichen Formkörper fertigbar sind. In Abhängigkeit der jeweiligen Verfahren bzw. Verfahrensschritte und der verwendeten Rohstoffe weisen die hergestellten Formkörper unterschiedliche Eigenschaften auf.

Die bekannten Verfahren zur Herstellung von Formkörpern sind sowohl hinsichtlich der verfahrenstechnischen Prozesse als auch hinsichtlich der verwendeten Rohstoffe äußerst energie- und kostenintensiv. Aufgrund des äußerst schwierigen Handlings der Verfahren und der verwendeten Rohstoffe ist eine gezielte Beeinflussung der technologischen Eigenschaften der hergestellten Formkörper nur begrenzt gegeben. Bei der Herstellung der Formkörper mittels Spritzgußmaschinen ist es bei den bekannten Maschinen notwendig, den Rohstoff und das Bindemittel vor der Verarbeitung in einem kostenaufwendigen Kneter zu einem Granulat zu verarbeiten, welches anschließend unter Druck verarbeitet wird. Weiterhin ist es bei den bekannten Formkörpern nachteilig, daß diese aus zum Teil mehreren Rohstoffen und Bindemitteln hergestellten Komposit-Werkstoffe kaum oder nur sehr schwer recycelbar sind.

Der vorliegenden Erfindung liegt daher die **Aufgabe** zugrunde, ein Verfahren zur Herstellung von Formkörpern bereitzustellen, mit welchem durch die Auswahl der verwendeten Rohstoffe bzw. Rohstoff-Kompositionen und Bindemittel sowie durch aufeinander angepaßte und abgestimmte Verfahrensschritte eine gezielte Einflußnahme auf die technologischen Eigenschaften der Formkörper genommen werden kann.

Die technische **Lösung** dieser Aufgabenstellung ist verfahrensmäßig dadurch gekennzeichnet, daß der mindestens eine Rohstoff und daß mindestens eine Bindemittel über einen Mischer zum Einstellen des gewünschten Verhältnisses Rohstoff-Bindemittel direkt zur Verarbeitung in eine Spritzgußmaschine gegeben werden.

Mit diesem erfindungsgemäßen Verfahren ist es möglich, die zu verwendenden Komponenten Rohstoff und Bindemittel direkt in der Spritzgußmaschine zu verarbeiten, das heißt ohne Zwischenschaltung des aus dem Stand der Technik bekannten kostenaufwendigen Kneters zur Herstellung von Granulaten. Der Spritzgußmaschine vorgeschaltet ist nur ein Mischer zum Einstellen des jeweils gewünschten Mischungsverhältnisses Rohstoff-Bindemittel. Vorteilhafterweise handelt es sich dabei um einen Kochmischer. Zur verarbeitungsfähigen Aufbereitung des Rohstoff-Bindemittel-Gemisches weist die Spritzgußmaschine eine beheizte Schneckenförderung auf, in der beispielsweise das Bindemittel auf Schmelztemperatur aufgewärmt wird.

Gemäß einer bevorzugten Ausführungsform des erfindungsgemäßen Verfahrens weist das Bindemittel eine geringere Dichte als der verwendete Rohstoff auf. Durch diesen Dichteunterschied ist es möglich, daß das Bindemittel während des Spritzgußverfahrens nach außen gedrückt wird und den Rohstoff - eine Schutzhülle bildend - umschließt. Durch diese Ausbildung der aus dem Bindemittel bestehenden Schutzhülle ist es durch die Auswahl eines entsprechenden Bindemittels möglich, auf eine separate Beschichtung der solchermaßen hergestellten Formkörper zu verzichten, wie dies aus dem Stand der Technik bekannt ist.

Als Rohstoffe werden insbesondere metallische Rohstoffe, insbesondere Eisen verwendet. Dazu eignen sich zum Beispiel auch in der Industrie anfallende Reststoffe wie Metallpulver aus Entstaubungen oder beispielsweise in der Automobilindustrie anfallende Schleif- und Bohr-Reststoffe. Zur Herstellung des Formkörpers werden ein oder mehrere zerkleinerte Rohstoffe, beispielsweise in der Form von Granulaten, Pulvern, Spänen oder Stäuben verwendet, die verschiedene Korngrößen aufweisen können und sowohl körnig als auch faserig sein können. Da das Zerkleinern von Materialien aller Art mit zu den energieintensivsten verfahrenstechnischen Prozessen zählt, sollten die zu verwendenden Rohstoffe vorteilhafterweise bereits zerkleinert sein.

Gemäß einer vorteilhaften Ausführungsform des erfindungsgemäßen Verfahrens wird als Bindemittel eine biologisch abbaubare Substanz verwendet. Durch diese Verwendung des biologisch abbaubaren Bindemittels ist es erstmalig möglich, die als Komposit-Werkstoffe hergestellten Formkörper wieder gezielt dadurch recyceln zu können, daß das die Rohstoffe zusammenhaltende Bindemittel unter bestimmten Voraussetzungen biologisch abgebaut wird und somit die Rohstoffe als Reinstoffe wieder freigibt.

Vorteilhafterweise werden als biologisch abbaubare Substanzen für das Bindemittel biologisch abbaubare Kunststoffe, insbesondere Polyesteramide, verwendet.

Weiterhin wird mit dem erfindungsgemäßen Verfahren vorgeschlagen, daß als Bindemittel solche biologisch abbaubaren Substanzen verwendet werden, die im Kontakt mit Lebendkulturen, wie diese Beispielsweise als Mikroorganismen in Kompost oder Faulschlamm vorkommen, biologisch abbaubar sind. Durch die Wahl eines solchen Bindemittels kann sichergestellt werden, daß sich der Formkörper durch den Abbau des Bindemittels nur dann wieder in die Ausgangsrohstoffe zerlegt, wenn eine eben diese Lebendkulturen aufweisende Umgebungsatmosphäre vorliegt. Solange diese den biologischen Abbau des Bindemittels hervorrufenden Umgebungsbedingungen nicht vorliegen, bewahrt der Formkörper seine im Spritzgußverfahren erhaltene Gestalt.

Durch die Wahl des Bindemittelanteils ist es möglich, die Abbaugeschwindigkeit des Bindemittels zu beeinflussen. Insgesamt kann der Bindemittelanteil bei einem nach dem erfindungsgemäßen Verfahren hergestellten Formkörper bis zu 60% betragen. Vorzugsweise beträgt der Bindemittelanteil 20%.

Mit dem erfindungsgemäßen Verfahren werden aus mindestens einem zerkleinerten Rohstoff und mindestens einem Bindemittel bestehende Formkörper bereitgestellt, deren technologische Eigenschaften über weite Bereiche durch gezielte Auswahl und Abstimmung von Rohstoffen und Bindemitteln einstellbar sind. So lassen sich Formkörper herstellen, die beispielsweise durch gezieltes Einstellen des spezifischen Gewichtes geeignet sind, alle entsprechenden, bisher verwendeten Formkörper zu ersetzen. Vorteilhafterweise weisen diese gemäß dem erfindungsgemäßen Verfahren hergestellten Formkörper eine Dichte von 5 g/cm³ bis 10 g/cm³ auf.

Gemäß einem wesentlichen Aspekt der Erfindung lassen sich Formkörper zu Fischereizwecken herstellen, die als Bleiersatzstoff verwendbar sind. Durch die Verwendung der entsprechenden Rohstoffe lassen sich dabei auch Schwimmer bzw. Wobbler fertigen. Gerade bei der Verwendung als Bleiersatzstoff zu Fischereizwecken ist es vorteilhaft, wenn das verwendete Bindemittel biologisch abbaubar ist, da eine Vielzahl von zu Angelzwecken verwendeten Bleigewichten oder aus Bleiersatzstoffen gefertigten Gewichten verlorengehen und auf dem Grund der Gewässer liegenbleiben. Bei der Verwendung eines erfindungsgemäßen Formkörpers mit einem biologisch abbaubaren Bindemittel zersetzt sich das Bindemittel aufgrund der im Sedimentschlamm der Gewässer vorhandenen Lebendkulturen mit der Zeit, so daß sich der Formkörper wieder in die Ausgangsstoffe zerlegt. Bei der Verwendung als Bleiersatzstoff zu Fischereizwecken sollten die Rohstoffe zur Herstellung des Formkörpers so gewählt werden, daß sie die Gewässer nicht oder nur unerheblich belasten. Hierzu eignen sich insbesondere metallische Werkstoffe, insbesondere Eisen, welches nach dem Abbau des Bindemittels durch Rostbildung weiter abgebaut wird.

Durch die Verwendung des erfindungsgemäß biologisch abbaubaren Bindemittels ist es somit erstmalig möglich, daß durch gezielte Einstellung der Umgebungsbedingungen der Formkörper wieder in seine Ausgangsrohstoffe zerlegbar ist. Da darüber hinaus der Abbau des Bindemittels durch Lebendkulturen biologisch erfolgt, ist das Recyceln mit keinem zusätzlichen Energieaufwand für das Zerkleinern der Formkörper verbunden. Das erfindungsgemäße Herstellungsverfahren ist darüber hinaus sehr kostengünstig, da die Ausgangsstoffe nicht erst zu Granulaten verarbeitet werden müssen und durch die aus dem Dichteunterschied resultierende Umhüllung des Robstoffes mir dem Bindemittel eine nachträgliche Ummantelung des solchermaßen hergestellten Formkörpers überflüssig wird.

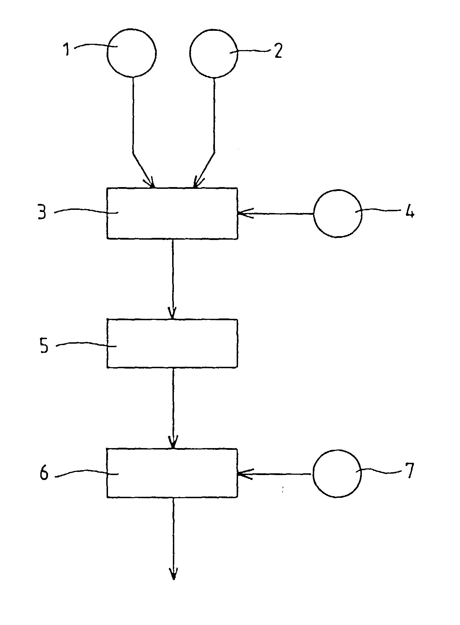

In der beiliegenden Figur ist symbolartig ein Ablaufschema zum Herstellen eines erfindungsgemäßen Formkörpers dargestellt.

In einem ersten Verfahrensschritt werden im gezeigten Ausführungsbeispiel zwei zerkleinere Rohstoffe 1 und 2, beispielsweise ein Eisenpulver und ein Aluminiumpulver verwendet, die in einem Mischer 3 zur Herstellung einer homogenen Mischung vermischt werden. In diesem Mischer 3 werden die zerkleinerten und vermischten Rohstoffe 1 und 2 mit mindestens einem Bindemittel 4 aufbereitet. Dazu wird im gezeigten Ausführungsbeispiel das Bindemittel 4, insbesondere eine biologisch abbaubare Substanz ebenfalls dem Mischer 3 zugeführt und mit den Rohstoffen 1 und 2 vermischt. Bei der Verwendung von biologisch abbaubaren Polyesteramiden verflüssigt sich das Bindemittel während des Mischvorgangs unter Hitzeentwicklung. Im zweiten Verfahrensschritt wird das Gemisch aus den Rohstoffen 1 und 2 sowie dem Bindemittel 4 in eine Spritzgußmaschine 5 gegeben. Aufgrund der geringeren Dichte des Bindemittels 4 im Vergleich zu den Rohstoffen 1 und 2 wird das Bindemittel 4 beim Spritzgießen nach außen gedrückt, so daß es die Rohstoffe 1 und 2 des fertigen Formkörpers umschließt, Ausgehend von der Spritzgußmaschine 5 wird das Gemisch aus den Rohstoffen 1 und 2 sowie dem Bindemittel 4 in eine Form 6 gepreßt. Zusätzlich können in die Form 6 Einlegeteile 7 gebracht werden, die beispielsweise die Stabilität des Formkörper vergrößern.

Insgesamt zeichnet sich das erfindungsgemäße Verfahren dadurch aus, daß nur wenige und kostengünstige Verfahrensschritte zur Herstellung der Formkörper notwendig sind.

### Bezugszeichenliste

- 1: Rohstoff
- 2: Rohstoff
- 3: Mischer
- 4: Bindemittel
- 5: Spritzgußmaschine
- 6: Form
- 7: Einlegeteile

## Patentansprüche

1. Verfahren zur Herstellung von aus mindestens einem zerkleinerten Rohstoff (1) und mindestens einem Bindemittel (4) bestehenden Formkörper,
**dadurch gekennzeichnet,**
daß der mindestens eine Rohstoff (1) und das mindestens eine Bindemittel (4) über einen Mischer (3) zum Einstellen des gewünschten Verhältnisses Rohstoff-Bindemittel direkt zur Verarbeitung in eine Spritzgußmaschine (5) gegeben werden.

2. Verfahren nach Anspruch 1, dadurch gekennzeichnet, daß das Bindemittel (4) eine geringere Dichte als der Rohstoff (1) aufweist.

3. Verfahren nach Anspruch 2, dadurch gekennzeichnet, daß aufgrund der geringeren Dichte das Bindemittel (4) beim Spritzgießen nach außen gedrückt wird und den Rohstoff (1) umschließt.

4. Verfahren nach mindestens einem der Ansprüche 1 bis 3, dadurch gekennzeichnet, daß als Rohstoff (1) metallische Rohstoffe, insbesondere Eisen, verwendet werden.

5. Verfahren nach mindestens einem der Ansprüche 1 bis 4, dadurch gekennzeichnet, daß als Bindemittel (4) eine biologisch abbaubare Substanz verwendet wird.

6. Verfahren nach Anspruch 5, dadurch gekennzeichnet, daß als Bindemittel (4) biologisch abbaubare Kunststoffe, insbesondere Polyesteramide, verwendet werden.

7. Verfahren nach Anspruch 5 oder 6, dadurch gekennzeichnet, daß das biologisch abbaubare Bindemittel (4) im Kontakt mit Lebendkulturen, wie beispielsweise Mikroorganismen in Kompost oder Faulschlamm, biologisch abbaubar ist.

8. Verfahren nach mindestens einem der Ansprüche 1 bis 7, dadurch gekennzeichnet, daß ein Bindemittelanteil von bis zu 60%, vorzugsweise 20%, verwendet wird.

9. Formkörper, bestehend aus mindestens einem zerkleinerten Rohstoff (1), der mit mindestens einem Bindemittel (4) versehen nach dem Verfahren nach mindestens einem der Ansprüche 1 bis 8 herstellbar ist, **dadurch gekennzeichnet,**
daß dieser eine Dichte zwischen 5 g/cm³ und 10 g/cm³ aufweist.

10. Formkörper nach Anspruch 9, dadurch gekennzeichnet, daß dieser als Bleiersatz zu Fischereizwecken verwendbar ist.
